# EUROPEAN PATENT APPLICATION

(11) **EP 3 214 484 A1**
(43) Date of publication of application: **06.09.2017**
(21) Application number: 15744460.5
(22) Date of filing: 13.03.2015
(51) Int. Cl.: G02F 1/1333, C03B 33/02

(54) **METHOD AND DEVICE FOR CUTTING LCD SCREEN GLASS**

(30) Priority: 27.10.2014 CN 201410585065
(71) Applicant: BOE Technology Group Co., Ltd., Beijing 100015 (CN); Beijing BOE Optoelectronics Technology Co., Ltd., Beijing 100176 (CN)
(72) Inventor: MENG, Xiangde, Beijing 100176 (CN); HU, Jun, Beijing 100176 (CN); LIU, Huazhe, Beijing 100176 (CN); LV, Guohua, Beijing 100176 (CN); MA, Jinbo, Beijing 100176 (CN)
(74) Representative: Gesthuysen Patent- und Rechtsanwälte
(86) International application number: PCT/CN2015/074209
(87) International publication number: WO 2016/065790

(57) **Abstract**

The invention discloses a liquid crystal screen glass cutting method and apparatus to solve the unhealthy problem of being broken or serrated to be produced for the liquid crystal screen glass at intersections of cutting marks in different directions in the cutting procedure. This liquid crystal screen glass cutting method comprises: a cutter wheel cutting a first surface of the liquid crystal screen glass along a first direction for the first time to form first cutting marks on the liquid crystal screen glass; and after the completion of the first-time cutting, the cutter wheel cutting the first surface of the liquid crystal screen glass along a second direction for the second time, wherein when the distance from a first cutting mark equals a cutter-out distance, the cutter wheel rises a jump height perpendicularly to the liquid crystal screen glass and keeping the jump height, travels a stroke along the second direction which is a sum of the cutter-out distance and a cutter-in distance, then descends perpendicularly to the liquid crystal screen glass to the liquid crystal screen glass and continues to cut the liquid crystal screen glass along the second direction, until second cutting marks are formed on the first surface, wherein the second direction is perpendicular to the first direction.

## Description

### FIELD OF THE INVENTION

The invention relates to the field of liquid crystal display, and in particular, to a liquid crystal screen glass cutting method and apparatus.

### BACKGROUND OF THE INVENTION

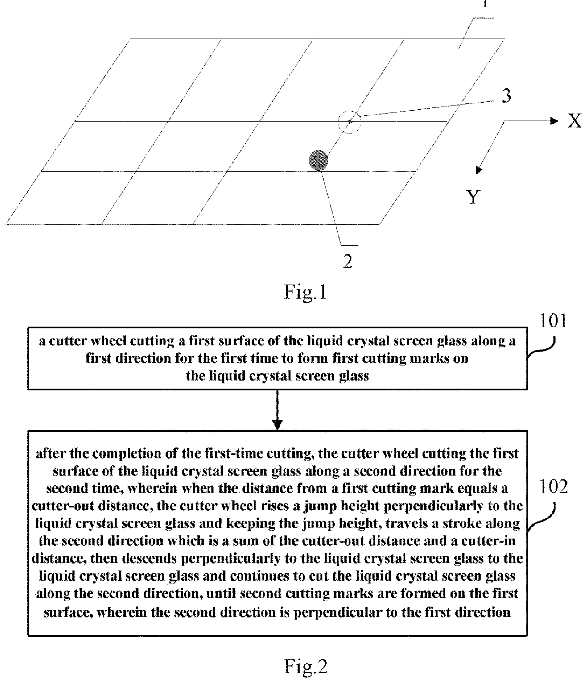

In the procedure of producing a liquid crystal cell of a liquid crystal panel, the assembled large liquid crystal screen glass needs to be separated into individual liquid crystal cells by steps such as cutting, splitting, etc., and then undergo steps such as filling liquid crystals, flattening the sealing, etc. to complete the preparation of a variety of desired liquid crystal cells. In a prior art liquid crystal screen glass cutting process, a cutter wheel for cutting needs to cut successively in the X direction and the Y direction on one and the same surface of liquid crystal screen glass, for example, first cut in the X direction to form cutting marks in the X direction, and then cut in the Y direction to form cutting marks in the Y direction. As shown in Fig. 1, cutting has already been performed in advance in the X direction of the liquid crystal screen glass 1 to form cutting marks, and when the cutter wheel 2 cuts the liquid crystal screen glass 1 along the Y direction, its cutting mark will intersect with a cutting mark in the X direction formed by cutting in advance to form an intersection 3, and the cutter wheel 2 will impact the intersection 3 of the liquid crystal screen glass 1, which will easily cause an unhealthy phenomenon of being broken or serrated to be produced at the intersection 3 of the liquid crystal screen glass 1, and reduce the rate of good products.

### SUMMARY OF THE INVENTION

An object of the invention is to provide a liquid crystal screen glass cutting method and apparatus to solve the above-mentioned problems occurring in the prior art liquid crystal screen cutting process.

To this end, according to a first aspect of the invention, there is provided a liquid crystal screen glass cutting method comprising the following steps of:
a cutter wheel cutting a first surface of the liquid crystal screen glass along a first direction for the first time to form first cutting marks on the liquid crystal screen glass; and
after the completion of the first-time cutting, the cutter wheel cutting the first surface of the liquid crystal screen glass along a second direction for the second time, wherein when the distance from a first cutting mark equals a cutter-out distance, the cutter wheel rises a jump height perpendicularly to the liquid crystal screen glass and keeping the jump height, travels a stroke along the second direction which is a sum of the cutter-out distance and a cutter-in distance, then descends perpendicularly to the liquid crystal screen glass to the liquid crystal screen glass and continues to cut the liquid crystal screen glass along the second direction, until second cutting marks are formed on the first surface, wherein the second direction is perpendicular to the first direction.

The beneficial effects of such a cutting method are as follows: when the cutter wheel cuts the liquid crystal screen glass for the second time, each time the cutter wheel approaches a first cutting mark, it rises to the jump height and keeping the height, travels the sum of the cutter-out distance and the cutter-in distance, and subsequently descends to the liquid crystal screen glass to continue to cut, such that the cutter wheel jumps over the first cutting line and does not contact it, thereby cutting to form a second cutting mark consisting of several line segments on one and the same line. Since the second cutting mark does not intersect with the first cutting mark, it is avoided that the cutter wheel impacts a corner of a small plate predetermined to be formed by cutting, thereby reducing the damage of a corner of a small plate and increasing the rate of good products.

In an embodiment of the liquid crystal screen glass cutting method according to the invention, there may be further comprised the following step of: judging whether the first surface of the liquid crystal screen glass is unhealthy after the second-time cutting, and if yes, performing the same cutting process on a second surface of the liquid crystal screen glass as the first surface. As such, relatively ideal cutting marks may be formed on the second surface.

In an embodiment of the liquid crystal screen glass cutting method according to the invention, the cutter-out distance may be 0.2 ∼ 0.3mm, the jump height may be 0.5 ~ 2mm, and the cutter-in distance may be 0.2 ∼ 0.3mm. Since after cutting, a splitting process further needs to be performed on the liquid crystal screen glass to form a liquid crystal screen of a specified size for a display apparatus, in order not to cause damage in the subsequent splitting procedure, an area that the cutter wheel jumps over, namely, the cutter-out distance and the cutter-in distance, should be defined properly. The jump height is determined according to the tact time and the procedure of acceleration and deceleration in the Z-axis, whereas the cutter-out and cutter-in distances are decided according to cracks produced along the cutter wheel direction after the glass is under a cutter wheel cut-in pressure.

In an embodiment of the liquid crystal screen glass cutting method according to the invention, a first cutting mark is a line along the first direction, there are a plurality of first cutting marks cut on the first surface, and individual first cutting marks are distributed parallel to each other; and a second cutting mark consists of a plurality of line segments on one and the same line, and there are a plurality of second cutting marks cut on the first surface which are parallel to each other.

In an embodiment of the liquid crystal screen glass cutting method according to the invention, individual first cutting marks are distributed equidistantly, and individual second cutting marks are distributed equidistantly.

According to a second aspect of the invention, there is provided a liquid crystal screen glass cutting apparatus comprising:
a cutter wheel disposed on a mechanical arm;
a base platform for placing the liquid crystal screen glass; and
a controller for controlling the mechanical arm to drive the cutter wheel to cut the liquid crystal screen glass,
wherein the cutting procedure comprises the following two-time cutting:
   in a first cutting procedure, the cutter wheel cuts the liquid crystal screen glass to form a plurality of first cutting marks along a first direction;
   in a second cutting procedure after the first cutting procedure, the cutter wheel cuts the liquid crystal screen glass along a second direction, wherein when the distance from a first cutting mark equals a cutter-out distance, the cutter wheel rises a jump height perpendicularly to the liquid crystal screen glass and keeping the jump height, travels a stroke along the second direction which is a sum of the cutter-out distance and a cutter-in distance, then descends perpendicularly to the liquid crystal screen glass to the liquid crystal screen glass and continues to cut the liquid crystal screen glass along the second direction, until second cutting marks are formed on the first surface, wherein the second direction is perpendicular to the first direction.

In an embodiment of the liquid crystal screen glass cutting apparatus according to the invention, the base platform for placing the liquid crystal screen glass may be a base platform which can be rotated 360 degrees, and in the second cutting procedure, the controller may control the base platform to be rotated 90 degrees to facilitate the cutter wheel to cut the liquid crystal screen glass along the second direction.

In an embodiment of the liquid crystal screen glass cutting apparatus according to the invention, there is further comprised a memory for storing data of the cutter-out distance, the jump height and the cutter-in distance that the controller needs to invoke.

In an embodiment of the liquid crystal screen glass cutting apparatus according to the invention, the memory is further used for storing a parameter of the spacing between neighboring ones of the first cutting marks parallel to each other and for storing a parameter of the spacing between neighboring ones of the second cutting marks parallel to each other.

In an embodiment of the liquid crystal screen glass cutting apparatus according to the invention, in the first cutting procedure, the controller invokes the parameter of the spacing between neighboring ones of the first cutting marks via the memory, and the controller controls the mechanical arm to drive the cutter wheel to cut on the liquid crystal screen glass to form multiple ones of the first cutting marks according to the parameter of the spacing between neighboring ones of the first cutting marks.

In an embodiment of the liquid crystal screen glass cutting apparatus according to the invention, in the second cutting procedure, the controller invokes data of the parameter of the spacing between neighboring ones of the second cutting marks, the cutter-out distance, the jump height, and the cutter-in distance via the memory, and the controller controls the mechanical arm to drive the cutter wheel to cut on the liquid crystal screen glass to form multiple ones of the second cutting marks perpendicular to the first cutting marks according to the parameter of the spacing between neighboring ones of the second cutting marks; and when the distance between the cutter wheel and each of the first cutting marks is consistent with the cutter-out distance, the controller controls the mechanical arm to drive the cutter wheel to rise perpendicularly to the liquid crystal screen glass to the jump height, and causes the cutter wheel to descend after it runs a stroke of the sum of the cutter-out distance and the cutter-in distance along the second direction at the jump height, and continue to cut along the second direction.

### BRIEF DESCRIPTION OF THE DRAWINGS

Fig. 1 shows a schematic diagram of a prior art liquid crystal screen glass cutting method;
Fig. 2 shows a flow chart of a liquid crystal screen glass cutting method according to an embodiment of the invention;
Fig. 3 shows a top view of the liquid crystal screen glass cutting according to an embodiment of the invention; and
Fig. 4 shows a side view of the liquid crystal screen glass cutting according to an embodiment of the invention.

### DETAILED DESCRIPTION OF THE INVENTION

In the following implementations of embodiments of the invention will be described in detail in connection with the drawings. It needs to be noted that identical or similar reference signs denote identical or similar elements or elements with identical or similar functions throughout. In the following embodiments described with reference to drawings are exemplary, used only for explaining the invention, and may not be understood as limiting to the invention.

Fig. 1 shows a schematic diagram of a prior art liquid crystal screen glass cutting method. As shown in Fig. 1, cutting has already been performed in advance in the X direction of the liquid crystal screen glass 1 to form cutting marks, and when the cutter wheel 2 cuts the liquid crystal screen glass 1 along the Y direction, its cutting mark will intersect with a cutting mark in the X direction formed by cutting in advance to form an intersection 3, and the cutter wheel 2 will impact the intersection 3 of the liquid crystal screen glass 1, which will easily cause an unhealthy phenomenon of being broken or serrated to be produced at the intersection 3 of the liquid crystal screen glass 1, and reduce the rate of good products.

Fig. 2 shows a flow chart of a liquid crystal screen glass cutting method according to an embodiment of the invention. As shown in Fig. 2, an embodiment of the invention provides a liquid crystal screen glass cutting method comprising:
101: a cutter wheel cutting a first surface of the liquid crystal screen glass along a first direction for the first time to form first cutting marks on the liquid crystal screen glass; and
102: after the completion of the first-time cutting, the cutter wheel cutting the first surface of the liquid crystal screen glass along a second direction for the second time, wherein when the distance from a first cutting mark equals a cutter-out distance, the cutter wheel rises a jump height perpendicularly to the liquid crystal screen glass and keeping the jump height, travels a stroke along the second direction which is a sum of the cutter-out distance and a cutter-in distance, then descends perpendicularly to the liquid crystal screen glass to the liquid crystal screen glass and continues to cut the liquid crystal screen glass along the second direction, until second cutting marks are formed on the first surface, wherein the second direction is perpendicular to the first direction.

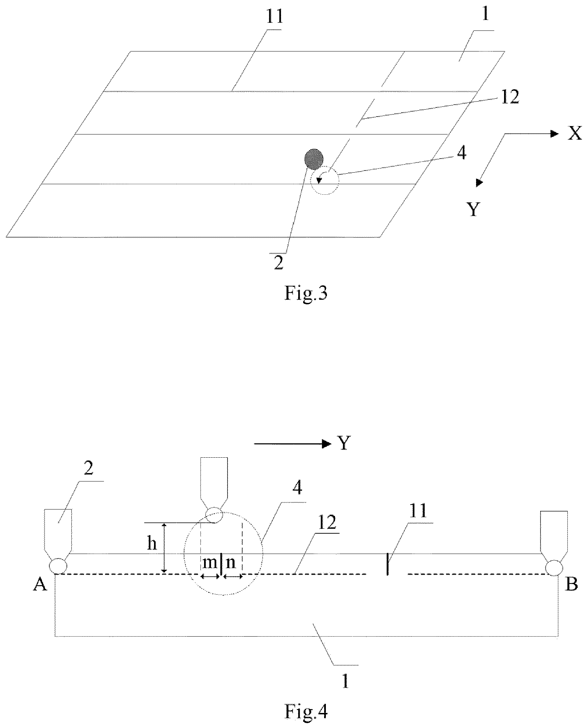

In the liquid crystal screen glass cutting method according to the invention, the cutter-out distance is a distance from the cutter wheel to its front nearest first cutting mark when it rises from the liquid crystal screen glass in order that the cutter wheel will not cut its front nearest first cutting mark in the procedure of cutting along the second direction; and the cutter-in distance refers to a distance from the cutter wheel to its rear nearest first cutting mark when it travels some distance along the second direction at the jump height and cuts in the liquid crystal screen glass again from the rising state, which may refer in particular to the cutter-out distance m and the cutter-in distance n as shown in Fig. 4.

Fig. 3 shows a top view of the liquid crystal screen glass cutting method according to an embodiment of the invention. On the first surface of the liquid crystal screen glass 1, the cutter wheel 2 cuts out a plurality of first cutting marks 11 along the first direction X, and when cutting in the second direction Y, the cutter wheel 2 jumps at a joint point 4 and cuts to form a second cutting mark 12. It should be noted that as shown in Fig. 3, the first cutting marks 11 may be a plurality of lines along the first direction X, i.e., a plurality of first cutting marks 11 may be formed by cutting, and individual first cutting marks 11 are distributed parallel to each other; likewise, it is also possible to cut to form a plurality of second cutting marks 12 along the second direction Y which are distributed parallel to each other, and each of the second cutting marks 12 may consist of multiple line segments on one and the same line. Since the second cutting jumps over the first cutting marks 11, each of the second cutting marks 12 is a discontinuous line, that is, consists of multiple line segments located on one and the same line.

Fig. 4 shows a side view of the liquid crystal screen glass cutting method according to an embodiment of the invention. On the first surface of the liquid crystal screen glass 1, the cutter wheel 2 has already cut out the plurality of first cutting marks 11 along the first direction X, and when cutting along the second direction Y, for example, cutting from an end A to an end B of the liquid crystal screen glass 1, the cutter wheel 2 jumps over a joint point 4. In particular, the cutter wheel 2 rises when the distance from the first cutting mark 11 at the joint point 4 is the cutter-out distance m, and the rising height is the jump height h; subsequently, the stroke for which the cutter wheel keeps the jump height h and travels is the sum of the cutter-out distance m and the cutter-in distance n; and then it descends to the first surface of the liquid crystal screen glass 1 and continues to cut the liquid crystal screen glass along the second direction Y, namely, it descends to the first surface of the liquid crystal screen glass 1 and continues to cut when the distance away from the first cutting mark 11 at the joint point 4 is the cutter-in distance n.

The beneficial effects of such a cutting method according to the embodiment of the invention lie in that: as shown in Fig. 3 and Fig. 4, when the cutter wheel 2 cuts the liquid crystal screen glass 1 for the second time, each time the cutter wheel 2 approaches a first cutting mark 11, it rises to the jump height h and keeping the height, travels the sum of the cutter-out distance m and the cutter-in distance n, and subsequently descends to the liquid crystal screen glass 1 to continue to cut, such that the cutter wheel 2 jumps over the first cutting line 11 and does not contact it, thereby cutting to form a second cutting mark 12 consisting of several line segments on one and the same line. Since the second cutting mark 12 does not intersect with the first cutting mark 11, it is avoided that the cutter wheel 2 impacts a corner of a small plate predetermined to be formed by cutting, thereby reducing the damage of a corner of a small plate and increasing the rate of good products.

For liquid crystal screen glass for a liquid crystal screen of a display apparatus, keeping one of its surfaces good can usually meet the requirements, and therefore according to a judgment of whether the cutting of the first surface of the liquid crystal screen glass is good, a different process may be selected in the cutting process for the second surface. Thus, the liquid crystal screen glass cutting method according to an embodiment of the invention may further comprise the following step of: judging whether the first surface of the liquid crystal screen glass is unhealthy after the second-time cutting, and if yes, performing the same cutting process on a second surface of the liquid crystal screen glass as the first surface, thereby forming relatively ideal cutting marks on the second surface.

Yet when the cutting of the first surface of the liquid crystal screen glass is ideal, the prior art cutting method as shown in Fig. 1 may be selected, or also the cutting method provided by embodiments of the invention may continue to be adopted to cut the second surface, which will not be repeated here.

Of course, splitting process further needs to be performed on the liquid crystal screen glass after cutting, to form a liquid crystal screen of a specified size for a display apparatus. For the area that the cutter wheel jumps over, damage will not occur to it in the subsequent splitting procedure according to the control of the cutter-out distance and the cutter-in distance, and therefore the cutter-out distance and the cutter-in distance need to have a reasonable range. Preferably, the cutter-out distance is 0.2 ∼ 0.3mm, the jump height is 0.5 ~ 2mm, and the cutter-in distance is 0.2 ~ 0.3mm. In general, the jump height is determined according to the tact time and the procedure of acceleration and deceleration in the Z-axis; and the cutter-out and cutter-in distances are decided according to cracks produced along the cutter wheel direction after the glass is under a cutter wheel cut-in pressure.

In the liquid crystal screen cutting method according to an embodiment of the invention, as shown in Fig. 3, individual first cutting marks 11 may be distributed equidistantly, and individual second cutting marks 12 may be distributed equidistantly.

An embodiment of the invention provides a liquid crystal screen glass cutting apparatus comprising:
a cutter wheel disposed on a mechanical arm;
a base platform for placing the liquid crystal screen glass; and
a controller for controlling the mechanical arm to drive the cutter wheel to cut the liquid crystal screen glass,
wherein the cutting procedure comprises the following two-time cutting:
   in a first cutting procedure, the cutter wheel cuts the liquid crystal screen glass to form a plurality of first cutting marks along a first direction;
   in a second cutting procedure after the first cutting procedure, the cutter wheel cuts the liquid crystal screen glass along a second direction, wherein when the distance from a first cutting mark equals a cutter-out distance, the cutter wheel rises a jump height perpendicularly to the liquid crystal screen glass and keeping the jump height, travels a stroke along the second direction which is a sum of the cutter-out distance and a cutter-in distance, then descends perpendicularly to the liquid crystal screen glass to the liquid crystal screen glass and continues to cut the liquid crystal screen glass along the second direction, until second cutting marks are formed on the first surface, wherein the second direction is perpendicular to the first direction.

In an embodiment of the liquid crystal screen glass cutting apparatus according to the invention, the base platform for placing the liquid crystal screen glass may be a base platform which can be rotated 360 degrees, and in the second cutting procedure, the controller may control the base platform to be rotated 90 degrees to facilitate the cutter wheel to cut the liquid crystal screen glass along the second direction.

Preferably, the liquid crystal screen glass cutting apparatus according to an embodiment of the invention may further comprise a memory for storing data of the cutter-out distance, the jump height and the cutter-in distance that the controller needs to invoke.

Preferably, the memory may further be used for storing a parameter of the spacing between neighboring ones of the first cutting marks parallel to each other and for storing a parameter of the spacing between neighboring ones of the second cutting marks parallel to each other.

The functions of the controller are described in detail as follows: in the first cutting procedure, the controller invokes the parameter of the spacing between neighboring ones of the first cutting marks via the memory, and the controller controls the mechanical arm to drive the cutter wheel to cut on the liquid crystal screen glass to form multiple ones of the first cutting marks according to the parameter of the spacing between neighboring ones of the first cutting marks; in the second cutting procedure, the controller invokes data of the parameter of the spacing between neighboring ones of the second cutting marks, the cutter-out distance, the jump height, and the cutter-in distance via the memory, and the controller controls the mechanical arm to drive the cutter wheel to cut on the liquid crystal screen glass to form multiple ones of the second cutting marks perpendicular to the first cutting marks according to the parameter of the spacing between neighboring ones of the second cutting marks; and when the distance between the cutter wheel and each of the first cutting marks is consistent with the cutter-out distance, the controller controls the mechanical arm to drive the cutter wheel to rise perpendicularly to the liquid crystal screen glass to the jump height, and causes the cutter wheel to descend after it runs a stroke of the sum of the cutter-out distance and the cutter-in distance along the second direction at the jump height, and continue to cut in the second direction. Obviously, various changes and variations may be made to the invention by those skilled in the art without departing from the spirit and scope of the invention. Thus, the invention is intended to encompass these changes and variations, provided that these changes and variations of the invention pertain to the scope of the claims of the invention and their equivalents.

## Claims

1. A liquid crystal screen glass cutting method **characterized by** comprising:
a cutter wheel cutting a first surface of the liquid crystal screen glass along a first direction for the first time to form first cutting marks on the liquid crystal screen glass; and
after the completion of the first-time cutting, the cutter wheel cutting the first surface of the liquid crystal screen glass along a second direction for the second time, wherein when the distance from a first cutting mark equals a cutter-out distance, the cutter wheel rises a jump height perpendicularly to the liquid crystal screen glass and keeping the jump height, travels a stroke along the second direction which is a sum of the cutter-out distance and a cutter-in distance, then descends perpendicularly to the liquid crystal screen glass to the liquid crystal screen glass and continues to cut the liquid crystal screen glass along the second direction, until second cutting marks are formed on the first surface, wherein the second direction is perpendicular to the first direction.

2. The method as claimed in claim 1, **characterized by** further comprising: judging whether the first surface of the liquid crystal screen glass is unhealthy after the second-time cutting, and if yes, performing the same cutting process on a second surface of the liquid crystal screen glass as the first surface.

3. The method as claimed in claim 1 or 2, **characterized in that**, the cutter-out distance is 0.2 ∼ 0.3mm, the jump height is 0.5 ~ 2mm, and the cutter-in distance is 0.2 ∼ 0.3mm.

4. The method as claimed in claim 1, **characterized in that**, the first cutting mark is a line along the first direction, there are a plurality of first cutting marks cut on the first surface, and individual first cutting marks are distributed parallel to each other; and the second cutting mark consists of a plurality of line segments on one and the same line, and there are a plurality of second cutting marks cut on the first surface which are parallel to each other.

5. The method as claimed in claim 4, **characterized in that**, individual ones of the first cutting marks are distributed equidistantly, and individual ones of the second cutting marks are distributed equidistantly.

6. A liquid crystal screen glass cutting apparatus **characterized by** comprising:
a cutter wheel disposed on a mechanical arm;
a base platform for placing the liquid crystal screen glass; and
a controller for controlling the mechanical arm to drive the cutter wheel to cut the liquid crystal screen glass,
wherein the cutting procedure comprises the following two-time cutting:
in a first cutting procedure, the cutter wheel cuts the liquid crystal screen glass to form a plurality of first cutting marks along a first direction;
in a second cutting procedure after the first cutting procedure, the cutter wheel cuts the liquid crystal screen glass along a second direction, wherein when the distance from a first cutting mark equals a cutter-out distance, the cutter wheel rises a jump height perpendicularly to the liquid crystal screen glass and keeping the jump height, travels a stroke along the second direction which is a sum of the cutter-out distance and a cutter-in distance, then descends perpendicularly to the liquid crystal screen glass to the liquid crystal screen glass and continues to cut the liquid crystal screen glass along the second direction, until second cutting marks are formed on the first surface, wherein the second direction is perpendicular to the first direction.

7. The apparatus as claimed in claim 6, **characterized in that**, the base platform is a base platform which can be rotated 360 degrees, and in the second cutting procedure, the controller controls the base platform to be rotated 90 degrees to facilitate the cutter wheel to cut the liquid crystal screen glass along the second direction.

8. The apparatus as claimed in claim 6, **characterized by** further comprising a memory for storing data of the cutter-out distance, the jump height and the cutter-in distance.

9. The apparatus as claimed in claim 8, **characterized in that**, the memory is further used for storing a parameter of the spacing between neighboring ones of the first cutting marks parallel to each other and for storing a parameter of the spacing between neighboring ones of the second cutting marks parallel to each other.

10. The apparatus as claimed in claim 9, **characterized in that**, in the first cutting procedure, the controller invokes the parameter of the spacing between neighboring ones of the first cutting marks via the memory, and the controller controls the mechanical arm to drive the cutter wheel to cut on the liquid crystal screen glass to form multiple ones of the first cutting marks according to the parameter of the spacing between neighboring ones of the first cutting marks; and
in the second cutting procedure, the controller invokes data of the parameter of the spacing between neighboring ones of the second cutting marks, the cutter-out distance, the jump height, and the cutter-in distance via the memory, and the controller controls the mechanical arm to drive the cutter wheel to cut on the liquid crystal screen glass to form multiple ones of the second cutting marks perpendicular to the first cutting marks according to the parameter of the spacing between neighboring ones of the second cutting marks; and when the distance between the cutter wheel and each of the first cutting marks is consistent with the cutter-out distance, the controller controls the mechanical arm to drive the cutter wheel to rise perpendicularly to the liquid crystal screen glass to the jump height, and causes the cutter wheel to descend after it runs a stroke of the sum of the cutter-out distance and the cutter-in distance along the second direction at the jump height, and continue to cut along the second direction.
